(19) Europäisches Patentamt
European Patent Office
Office européen des brevets

(11) EP 2 943 699 B1

(12) EUROPEAN PATENT SPECIFICATION

(45) Date of publication and mention
of the grant of the patent:
**16.12.2020 Bulletin 2020/51**

(51) Int Cl.:
*F16H 15/38* (2006.01)   *F02B 39/04* (2006.01)
*F16H 61/664* (2006.01)

(21) Application number: **14704075.2**

(86) International application number:
**PCT/EP2014/000247**

(22) Date of filing: **10.01.2014**

(87) International publication number:
**WO 2014/108345 (17.07.2014 Gazette 2014/29)**

(54) **DRIVE ARRANGEMENT FOR A SUPERCHARGER**

ANTRIEBSANORDNUNG FÜR EINEN LADER

AGENCEMENT D'ENTRAÎNEMENT POUR UN COMPRESSEUR DE SURALIMENTATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.01.2013 GB 201300453
10.01.2013 PCT/EP2013/050425
10.01.2013 PCT/EP2013/050431
10.01.2013 PCT/EP2013/050433**

(43) Date of publication of application:
**18.11.2015 Bulletin 2015/47**

(73) Proprietor: **Allison Transmission, Inc.
Indianapolis, IN 46222 (US)**

(72) Inventors:
• **SHAWE, James
Leyland
Lancashire PR26 7UX (GB)**
• **FULLER, John
Preston,
Lancashire PR2 1AD (GB)**
• **DUTSON, Brian
Manchester M29 7PT (GB)**
• **DE FREITAS, Andrew
Wigan
Lancashire WN6 0RS (GB)**

(74) Representative: **HGF
1 City Walk
Leeds LS11 9DX (GB)**

(56) References cited:
WO-A2-2008/002457   WO-A2-2011/064572
US-A- 3 394 617   US-A1- 2010 267 510
US-A1- 2012 000 446

**Description**

The present invention relates to a drive arrangement for a supercharger. In particular, it relates to a drive arrangement for a supercharger in which drive is transmitted from an internal combustion engine to a supercharger through a drive system that includes a continuously-variable transmission (CVT).

The invention has particular application to passenger cars and light road vehicles. While this is not the only application of the invention, this application will be used as a basis for description of how the invention might be implemented. In this regard, embodiments of the invention will typically be used on an engine that is controlled by a driver using a foot pedal that allows a driver to control the amount of torque that the engine will cause to be delivered to the vehicle's transmission. In the case of a petrol engine, this pedal will directly or indirectly control the position of a throttle that regulates flow of air into the engine, while in the case of a diesel engine, the pedal will directly or indirectly control the amount of fuel that will be injected into the engine. Therefore, in this specification, the commonly-used term "accelerator pedal" will be used to refer generally to such a pedal independently of its actual, physical effect on the operation of the engine.

Forced induction is seen as making an important contribution to improving the efficiency of internal combustion engines. In particular, superchargers driven from the engine (as contrasted with exhaust-driven turbochargers) can offer a considerable degree of control over the amount of air entering the engine at any given time.

In general, the rotational speed at which the supercharger must be driven is greater than the rotational speed of the crankshaft of the engine by a large factor. For example, a typical petrol engine for a passenger car will operate at speeds between 750 and 6000 rpm, while a centrifugal supercharger might be required to operate at between 40 000 and 250 000 rpm. Hitherto, this has typically been achieved by providing a step-up gear train of fixed ratio between the crankshaft and the supercharger.

It is apparent that causing the supercharger to be driven at a fixed multiple of the crankshaft speed is not optimal. If the supercharger system is configured to deliver the maximum possible engine torque at low engine speed then the power is wasted at high engine speed. If the compressor is geared such that it supplies the maximum possible engine torque at high engine speed then engine torque at low engine speed may be insufficient. A variable ratio drive between the crankshaft and the supercharger could be used to reduce the amount of wasted energy that is delivered to the supercharger whilst maximising torque output at low engine speeds. A continuously-variable ratio drive is advantageous over a step-change ratio drive.

Consider now the situation where an engine is operating to drive a vehicle at substantially steady speed using a small percentage of the engine's available torque, and the driver suddenly depresses the accelerator pedal, for example to overtake a slower vehicle. Ideally, the supercharger would be accelerated to its maximum speed in as short a time as possible to answer the driver's request for maximum engine torque. In response to such a demand, if a variable-ratio drive is immediately swept from a low to a high ratio, a substantial part of the output torque of engine might be required just to accelerate the supercharger, and will therefore be unavailable to accelerate the vehicle. Without proper control, it is possible to imagine a situation where so much torque is absorbed by the supercharger drive, a sudden accelerator pedal input could actually result in a transient reduction in the torque delivered to the driving wheels. This is highly undesirable.

A continuously-variable transmission system incorporating a variator that is torque-controlled might provide a straightforward solution to this control problem. Such variators are known to those skilled in the technical field and are typically, but not exclusively, of the toroidal traction drive type. The control input to the transmission can control the maximum inertial (or accelerating) torque that will be delivered to the supercharger, and this can be set to a predetermined maximum, or a proportion (that could be fixed or variable) of the total current engine torque. However, such variator systems are costly and heavy to implement, since they typically require an actuator that is capable of delivering significant power to a roller carrier of the variator, and associated hydraulic control apparatus are required. Therefore, while such a transmission might solve the control problem, it may not provide an acceptable solution for use in a passenger car, where cost and weight must be kept to a minimum.

Examples of drive arrangements that include a continuously-variable transmission are provided in the following documents. Document WO 2011/064572 A2 provides an example of a continuously variable ratio transmission apparatus of the toroidal race rolling traction type, suitable for low-torque applications. The apparatus is included in a system where a supercharger for an internal combustion engine is connected to, and driven by, the continuously variable transmission system via an epicyclic gear set. Document WO 2008/002457 A2 provides an example of a power modulating device comprising continuously variable transmission which is coupled to a crankshaft of a prime mover where the continuously variable transmission is used to regulate the speed and/or torque delivered to a device. Document US 2012/000446 A1 is related to torque pulse dampeners and provides an example of a system comprising an engine and a continuous variable transmission, both coupled to a torque pulse dampener. Document US 2010/0267510 A1 provides examples of continuous variable transmissions in which various traction planet assemblies and stator plates can be used to facilitate shifting the ratio of a continuous variable transmission.

The aim of this invention is to provide an arrangement whereby a supercharger can be driven through a continuously-variable transmission from an internal combustion engine that is capable of providing the required degree of control for effective operation while keeping cost, weight and complexity to a minimum.

To this end, from a first aspect this invention provides a supercharging arrangement for an internal combustion engine according to claim 1.

In arriving at this invention, the inventors realised that the disadvantages of operation of the variator under ratio control, as compared with the clearly preferable torque control, can be overridden by the savings in cost and weight that are achieved by the comparative simplicity and low power required to operate under ratio control. Operation under torque-control allows simple implementation of a control system (all it must do is set a limit on the torque that will be applied to the engine or the supercharger) ratio control presents a considerably greater technical challenge.

In general, the control system must operate to cause the engine to deliver an amount of torque that is indicated by states of one or more inputs to the control system. Such inputs may be directly determined by a person (such as an accelerator pedal of a vehicle), an automated control such as a cruise control or autopilot, other vehicle control systems (such as stability control systems), an engine speed governor (which itself may be mechanical or an integral part of an engine control system) or the vehicle powertrain system which may comprise one or more of an automatic or automated gearbox, infinitely variable transmissions and CVTs (of which examples include mechanical, electric or hydraulic variants), energy storage systems (for example mechanical types (for example a flywheel), electric types (for example a battery) or hydraulic types (for example an accumulator), or other driven devices such as air compressors, air conditioning systems, alternators, oil pumps and any power take-off driven implements. From this, and knowledge of instantaneous operating conditions, the control system calculates a target value for a control variable representative of the state of operation of an internal combustion engine associated with the supercharging arrangement. With knowledge of the engine speed, the control system operates to calculate a target variator ratio such that speed at which the supercharger operates approaches that to achieve the value of the control variable.

The control system further operates to adjust the variator ratio to ensure that the rate at which the supercharger speed changes does not exceed a predetermined limit, for example to ensure that the torque that is applied to the output of the engine or to the variator does not exceed a threshold. For example, this may be one or more of a proportion of the total currently available engine torque or a fixed maximum value. For example, the control system may operate to accelerate the supercharger at a rate that is a function of the error value that is the difference between the target speed and the current speed of the supercharger. This function may be a proportional type where the accelerating torque applied to the supercharger increases with increasing error value, and decreases with decreasing error value. Such an arrangement would cause the supercharger to approach the target speed asymptotically so that there are no step changes in torque applied the engine crank.

The variator may be of the hydrostatic type (incorporating a pump and a motor), an electric motor-generator CVT, a variable belt drive CVT, a variable chain drive CVT, a ball bearing traction drive (examples include GB-A-2394519 and US-A-6551210), and in the case of mechanical drives, may be of the friction-drive or traction-drive type. In typical embodiments, the variator is a toroidal variator. Most typically, the variator may be a full toroidal variator in which drive between elements of the variator occurs through a traction fluid. Specifically, the variator may typically comprise: an input surface and an output surface, the input and output surfaces being coaxially mounted for rotation about a variator axis, and a toroidal cavity being defined between the working surfaces; a plurality of rolling elements disposed between and being in driving engagement with the input and the output surfaces at respective contact regions, each rolling element being mounted on a carriage assembly for rotation about a rolling axis, each rolling element being free to pivot about a tilt axis, the tilt axis passing through the rolling element perpendicular to the rolling axis, and intersecting the rolling axis at a roller centre, whereby a change in the tilt angle causes a change in the variator ratio being the ratio of rotational speeds of the races.

Cost and weight can be further optimised by choice of variator configuration. In particular, variators that require very low power for actuation during ratio change are advantageous. This allows the variator to be actuated with a low-cost actuator, for example an electrically-powered actuator. Variators that accomplish ratio change by causing the rollers to rotate about a pitch axis, a mechanism that the applicants refer to as "tilt steer" are particularly suited to this application. Therefore, in preferred embodiments of the invention, in the variator, each carriage assembly can cause pivotal movement, which pivotal movement about a pitch axis that results in a change of a pitch angle of the rolling element, the pitch axis passing through the roller centre and through the contact regions; and the variator further comprising a control member operative to cause a respective carriage assembly to undertake the said pivotal movement thereby changing the pitch angle, so urging the plurality of rolling elements to pivot about their tilt axes and thereby provide a change in variator ratio.

The or each toroidal cavity of the variator advantageously contains no more than two rolling drive elements. The variator may further comprise a reaction member operatively coupled to the plurality of rolling elements such that it bears the reaction torque from the rolling elements within the toroidal cavity.

In embodiments of the invention, the variator may include two similar cavities, whereby it comprises a second input surface and a second, facing output surface defining a second toroidal cavity; a second plurality of rolling elements disposed between the second input and second output surfaces and being in driving engagement with the surfaces, each rolling element being rotatably mounted on its respective carriage assembly and able to tilt about an axis passing through the centre of the rolling element in order to change the variator ratio and being mounted for pivotal movement resulting in the rolling element pitching about an axis passing through the centre of the rolling element and perpendicular to the rotational axis of the rolling element and also perpendicular to the ratio change axis; a control member for actuation of each carriage assembly to pitch the respective rolling element resulting in a change of tilt angle and a change in variator ratio; a first reaction member operatively coupled to the plurality of rolling elements in the first cavity and a second reaction member operatively coupled to the second plurality of rolling elements in the second cavity such that the first and second reaction members bear reaction loads arising from the respective rolling elements.

The variator may further comprise a load-sharing assembly operatively linked to the reaction members of the first and second cavities such that reaction torque from the reaction members is balanced.

Typical embodiments of the invention further comprise a step-up gearset coupled in series with the variator. The step-up gearset is typically connected between the variator and the supercharger. The step-up gearset may include a traction drive epicyclic gearset, and in those embodiments, it may share traction fluid with the variator.

The variator may include a torque sensing arrangement that is operative to reduce the ratio of the variator when the torque applied by the variator to the supercharger exceeds a threshold. This arrangement can serve to protect the variator against damage from excessive torque.

The supercharger may incorporate a dynamic compressor (for example a centrifugal compressor or axial compressor) or a positive-displacement compressor (such as a screw type, scroll type or lobe pump) and may incorporate a plurality of compressors of similar or different types. A preferred embodiment comprises a centrifugal compressor.

From a second aspect, this invention provides a drivetrain for a vehicle comprising an internal-combustion engine and that has an induction system that incorporates a supercharging arrangement with is an embodiment of the invention from its first aspect.

The control system generally operates to cause the variator to operate at a ratio that causes a control variable, for example a control variable of the drivetrain, to approach a target value. The control variable may be one or more of a compressor speed of the supercharger, supercharger boost pressure, manifold air pressure, mass air flow, engine output speed or engine output torque.

Embodiments of the invention will now be described in detail, by way of example, and with reference to the accompanying drawings, in which:

Figure 1 is a highly diagrammatical representation of a vehicle drive system including a supercharger and a drive arrangement for a supercharger embodying the invention;

Figure 2 is a diagram of a drive unit being a component of an the embodiment of Figure 1;

Figure 3 is a perspective view of part of a first variator that is suitable for use in embodiments of the invention;

Figure 4 is a control assembly of the part of the variator shown in Figure 3;

Figure 5 is a top view of the part of the variator shown in Figure 3;

Figure 6 is a side elevation of the part of the variator shown in Figure 3;

Figures 7 and 8 are perspective and part cut-away views of part of a second variator that is suitable for use in embodiments of the invention;

Figure 9 is a perspective view of part of a third that is suitable for use in embodiments of the invention;

Figure 10 is a perspective view of a variator being a fourth variator that is suitable for use in embodiments of the invention;

Figures 11 and 12 are an axial view and a top elevation of the variator of Figure 10;

Figures 13 and 14 show a variator being a fifth variator that is suitable for use in embodiments of the invention;and

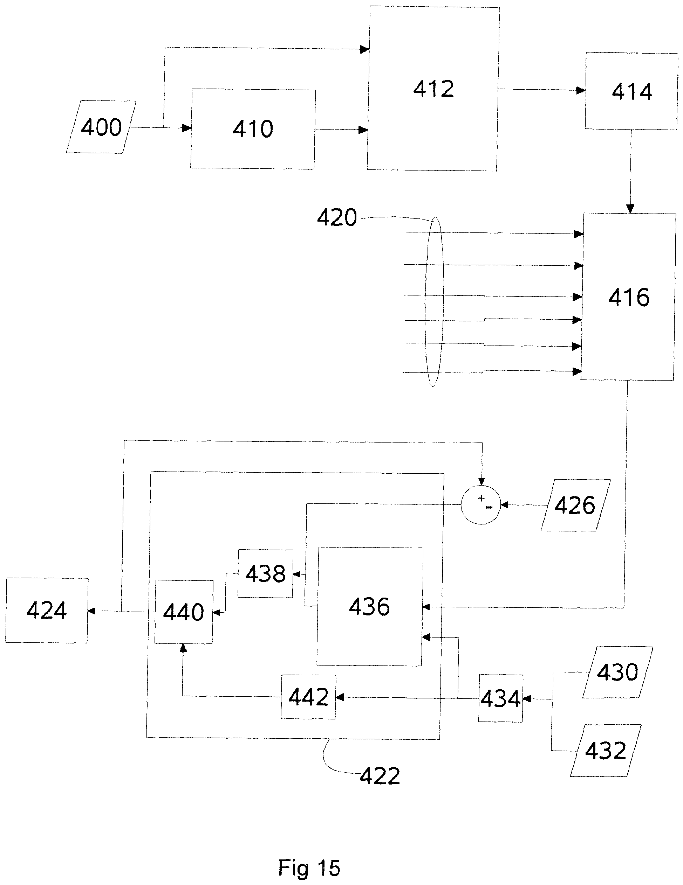

Figure 15 is a diagram that illustrates control of a variator in a drive system embodying the invention.

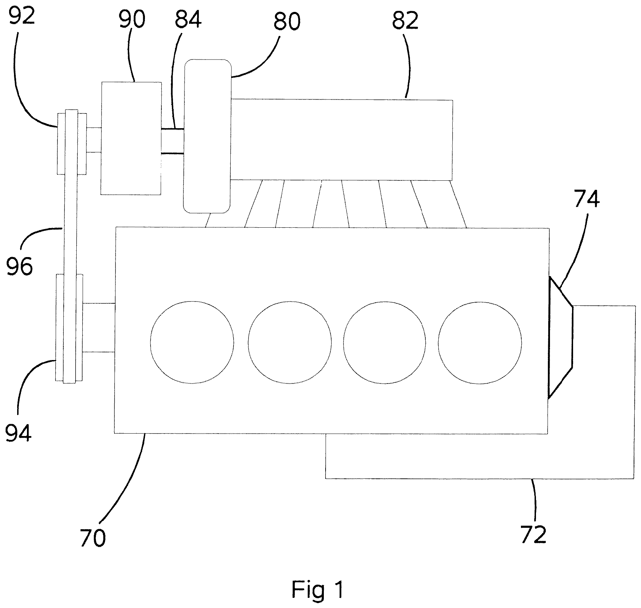

With reference to Figure 1, a drive system for a vehicle, such as a passenger car, comprises an internal combustion engine 70, normally fuelled by petrol or diesel fuel, but alternatively by liquid petroleum gas, ethanol, or a variety of other combustible fuels. A main drive from the engine 70, typically derived from an output at one end of a crankshaft, is connected to an input of a variable-speed transmission 72, typically through a coupling 74 such as a friction clutch or a torque converter. The variable-speed transmission 72 may be continuously-variable between a minimum and a maximum ratio, or may have a plurality of discrete ratios, and may be controlled manually by a driver or automatically. In embodiments where the transmission 72 is continuously-variable, it may have a "geared neutral" ratio, at which its output is stationary irrespective of the speed of its input. In such embodiments, the coupling 74 may be omitted. The output of the transmission 72 is connected to the input of a final drive system that, in turn, transmits drive to road wheels of a vehicle. The final drive system may drive two wheels of a vehicle (two front wheels or two rear wheels) or may drive all wheels of a vehicle, typically splitting drive through a transfer box.

The above describes just a range of typical configurations of a drive system that may embody the invention. Other arrangements are possible, using different arrangements of variable-speed transmission or final drive, and the drive system may be incorporated into a drive in a large range of applications where an internal combustion engine is a prime mover.

The internal combustion engine 70 has an induction system that has a supercharging arrangement. The supercharging arrangement comprises a supercharger 80. The supercharger 80 draws in air through an intake at approximately ambient atmospheric pressure, and delivers air to an inlet manifold 82 of the engine 70 at a pressure that is greater than the pressure at the intake by a pressure difference that depends upon the speed of rotation of a drive shaft 84 of the supercharger 80. Air that passes through the supercharger 80 normally also passes through an air filter and an air-flow meter, and, in the case of a spark-ignition engine, a throttle body. Any or all of these components can be disposed either downstream or upstream of the supercharger 80.

The drive shaft 84 of the supercharger is driven from the crankshaft of the engine 70 from an output shaft of a variable-speed drive unit 90. The drive unit 90 has an input shaft that is driven by the crankshaft of the engine 70. In this embodiment, the input shaft of the drive unit 90 carries a pulley 92 that is connected through a drive belt 96 to a crankshaft pulley 94 that is carried on one end of the crankshaft of the engine 70. The drive belt 96 may also drive other ancillaries, such as an alternator, an air-conditioning pump, a power steering pump, etc.

The purpose of the drive unit 90 is to ensure that the drive shaft 84 of the supercharger 80 is turned at a speed that most nearly approaches an optimum for any given condition of operation of a vehicle drive system. As drive is taken from the crankshaft of the engine to the drive shaft 84 of the supercharger 80, there are three principal stages at which the speed of drive is changed. First, the drive from the crankshaft will drive the input shaft of the drive unit 90 at a speed ratio Ri; second, within the drive unit 90, there is a fixed ratio stage $R_2$; and third, within the drive unit, there is a variable ratio stage Rv, such that the instantaneous speed $\omega_s$ of the drive shaft 84 of the supercharger 80 is calculated from the speed of the crankshaft $\omega_c$ by $\omega_s = \omega_c R_1 R_2 R_V$. Since $R_1 R_2$ are constants that are calculated as part of the design of the drive system, control of the drive system involves calculating instantaneous optimal value of Rv, and causing the variable-ratio stage to operate with a ratio of value Rv.

In preferred embodiments that are particularly, but not exclusively, for use with centrifugal superchargers, the variable ratio stage Rv of the drive unit comprises a ratio-controlled full-toroidal variator, and the fixed ratio stage $R_2$ comprises a traction epicyclic drive. Thus, the shaft of the drive unit 90 drives the input to a variator, the variator has an output that drives the input to an epicyclic gearset, and the epicyclic gearset has an output that is connected to the drive shaft 84 of the supercharger 80.

While a wide variety of ratio-controlled variators that are capable of operating in the required speed range and handling the required power can be used in embodiments of the invention, there is a strong incentive to minimise its manufacturing cost and power required for actuation, particularly when used in an automotive application. A range of variators in which ratio is controlled by changing the pitch of rollers in the variator has been found to be particularly advantageous. Several such variators will now be described.

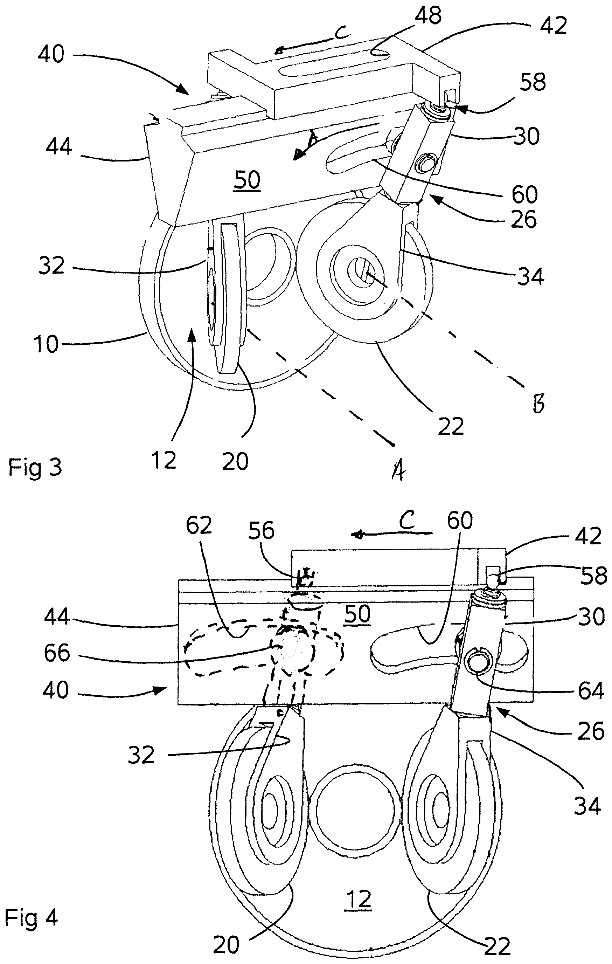

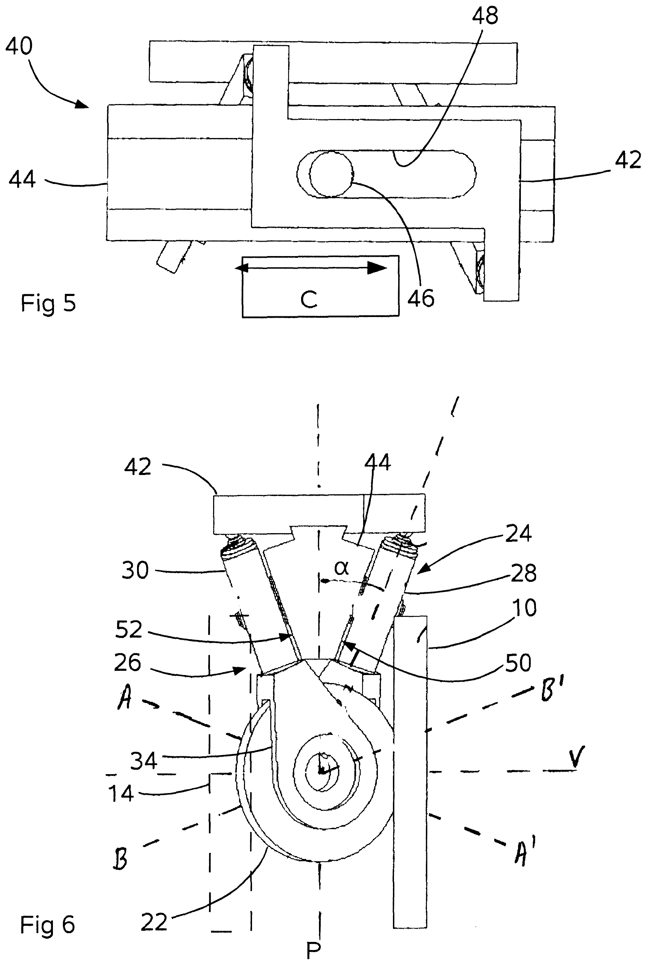

Figures 3 to 6 show different views of a part of a variator embodying the invention. The variator comprises an input race 10, shaped generally as an annulus. The input race 10 has an inner surface within which annular recess 12 of arcuate cross-section is formed to provide a working surface of the input race 10. The variator further comprises an output race 14, shown in dotted lines only in Figure 4 that is substantially similar to the input race 10. The input race 10 and the output race 14 are disposed coaxially on a variator axis V, with their working surfaces facing one another, thus forming a toroidal cavity between the races 10, 14 that is bounded by their working surfaces. Each of the races 10, 14 is mounted for rotation about the variator axis V.

Rolling elements, in this case in the form of approximately cylindrical rollers 20, 22 with suitably profiled outer rolling surfaces are disposed for operation within the toroidal cavity. In this embodiment, there are two such rollers, but it will be understood that a greater number could alternatively be provided.

Each roller 20, 22 is mounted on a respective roller carriage assembly 24, 26. Each roller carriage assembly 24, 26 includes a stem 28, 30 and a fork 32, 34. Each fork 32, 34 carries a respective roller 20, 22 such that the roller 20, 22 can rotate on a bearing for rotation about a rolling axis that extends through its centre. Within each roller assembly 24, 26, each fork 32, 34 can rotate on its stem 28, 30 about a respective tilt axis that is normal to its rolling axis.

Each carriage assembly 24, 26 is mounted such that the tilt axis of the stems 28, 30 is inclined to a plane P as shown in Figure 4. The plane P is perpendicular to the variator axis at an angle "$\alpha$" known as the castor angle, as shown on Figure 4. Each roller 20, 22 is free to pivot about the respective tilt axis, being the longitudinal axis of the stem 28, 30, which passes through the centre of the roller 20, 22 - that is to say, the castor angle is the angle between the tilt axis and the centre plane of the variator.

The input race 10 is driven by and transmits drive to the output race 14 through the rollers 20, 22 which are in driving engagement between the races.

The variator includes a control assembly 40 which comprises a slider 42 carried on a support 44. The slider 42 is adapted for reciprocal linear movement relative to the fixed part 44. A peg 46 projects from the support 44 through a slot 48 in the slider 42 such that it acts as a stop to limit the range of movement of the slider 42 on the support. The control assembly 40 is adapted to provide control actuation of the variator by translational movement. The slider 42 is able to travel back and forth along the support 44 in a direction indicated by arrow C, in a plane perpendicular to the variator axis. In this embodiment, the slider 42 is connected to each roller carriage assembly 24, 26 at a location radially outward of a cylindrical plane which is parallel to the variator axis V and tangential to the periphery of the larger of the input race 10 and output race 14. In an alternative embodiment, the carriage assemblies 24, 26 may each be actuated by their own actuator. The support 44 has reaction surfaces 50, 52 that are each inclined at the castor angle $\alpha$ to the centre plane of the variator perpendicular to the variator axis V.

The control assembly 40 is operatively coupled to the carriage assemblies 24, 26 by actuation joints 56, 58. The actuation joints 56, 58 constrain upper end parts of each stem 28, 30 to move linearly with the slider 32 while allowing the stems 28, 30 to pivot with respect to the slider 32. The single control assembly 40 controls both carriage assemblies 24, 26 in unison. The carriage assemblies 24, 26 are also coupled to the control assembly 40 at respective reaction points. Each reaction point comprises an arcuate slot 60, 62 that extends into a respective reaction surface 50, 52 of the support 44. The stem 28, 30 of each of the carriage assemblies 24, 26 carries a projecting reaction pin 64, 66 that extends into a respective arcuate slot, in which it is a close sliding fit with sufficient to allow free sliding engagement of each reaction pin 64, 66 in its slot 60, 62. The stem may be equipped with rollers to provide smooth engagement and a rolling engagement with the slot.

(In an alternative arrangement, the arcuate slots may be arranged perpendicular to the stems 28, 30 with the stem passing through the slot and forming the engaging part which cooperates with the slot to locate the roller carriage.)

Each roller 20, 22 and its carriage assembly 24, 26 together have four points of contact with the variator; contact between the roller 20, 22 at the working surface of the input race, the working surface of the output race 14, with the control assembly 40 at the actuation joint 58, 58, and the reaction point through the reaction pin 64, 66 and its respective slot 60, 62. Each carriage assembly 24, 26 is located within the toroidal cavity by the two points of contact with the control assembly 40 and by the contact between the roller and the working surfaces of the input and output races. These points of contact mean that the carriage assemblies 24, 26 are mounted such that they are able to move pivotally to vary a pitch angle about a respective steering axis A-A', B-B' passing through the centre of the rollers 20, 22 and perpendicular to the plane of movement of the slider 44. This steering axis is perpendicular to the tilt axis of the carriage assembly. The carriage assemblies carriage assembly 24, 26 are actuated through the actuation joints 56, 58, situated radially distant from the roller pivot axes, such that the carriage assemblies 24, 26 sweeps through an arc centred on the axis A-A', B-B'. The rollers are guided by the engagement of engagement parts 14, 24 with slots 33, 34. The roller carriages 14, 24 are constrained to the pivotal movement by the coupling of the reaction pins 64, 66 in their slots 60, 62 about the reaction point. The arrangement allows reaction torque from the rollers 20, 22 to be borne.

The pivoting motion of the carriage assemblies that occurs as the slider 44 moves imparts to the rollers 20, 22 a component of rotation about their tilt axis (that is, an axis passing through the centre of the roller and which is parallel to the variator axis V). The pivoting motion also imparts a component of rotation about an axis perpendicular to the tilt axis, referred to as a ratio change axis. This rotation allows each roller 20, 22 to alter its tilt so as to change the speed ratio and may momentarily experience contact forces from the input and output surfaces. The mounting of the roller 20, 22 in a fork 32, 34 such that is may rotate about its precession axis enables the roller 20, 22 to tilt so as to find a path of least resistance to reach equilibrium so as to change the variator ratio. In this way, through the combination of the pivotal movement of the carriage assembly and the freedom of rotation about the tilt axis, the roller is free to undergo a tilting motion to provide a change in variator speed ratio. The rollers 20, 22 are therefore able to steer (that is, to vary their tilt) in response to an actuation force by pitching about an axis parallel to the variator axis and alter their position to change the speed ratio of the variator. To achieve optimal pivoting movement that minimises any component that serves to change the roller tilt and therefore the variator ratio, the slots 60, 62 are formed such that when their shape is projected onto a plane normal to the variator axis is an arc centred on the variator axis.

In another embodiment, each carriage assembly comprises a stem alone with the rollers being mounted on the end of the stem through a gimbal. In this arrangement each roller 20, 22 is mounted on its respective carriage assembly by a pivoting joint passing through the roller centre such that the roller is free to tilt about its tilt axis. The stem suitably lies in the centre plane P of the variator and the gimbal arrangement provides the castor angle and degrees of freedom for the roller 20, 22 to freely tilt.

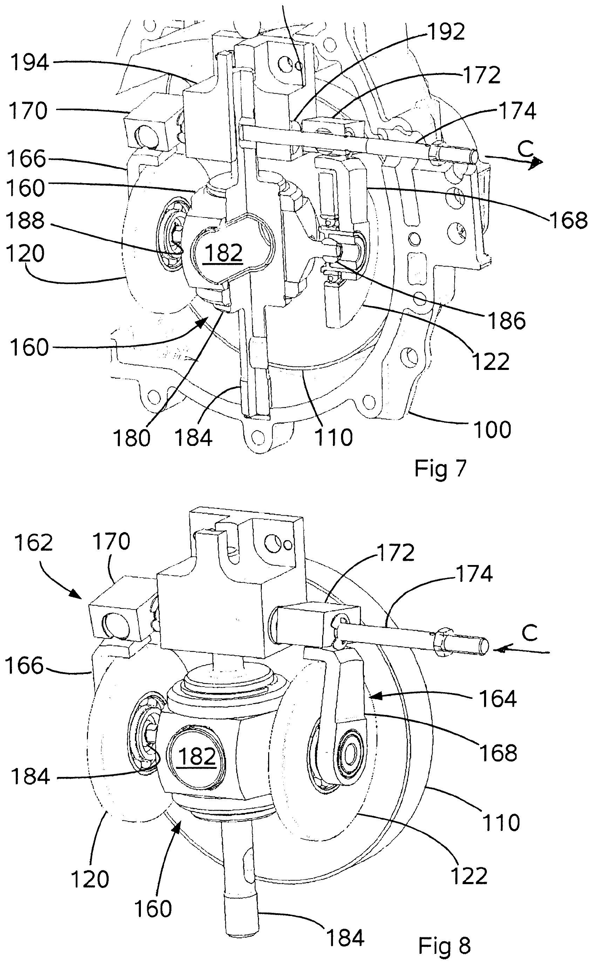

Figures 7 and 8 illustrate part of a variator that includes a reaction member 160 operatively coupled to the rollers 120, 122 that transmit drive between the input race 110 and the output race (not shown). The purpose of the reaction member is to bear reaction torque from the rollers 120, 122. The rollers 120, 122 are mounted on carriage assemblies 162, 164. Each carriage assembly comprises a carrier 166, 168 and a mounting part 170, 172. Each roller 120, 122 is carried for rotation about its axis on a respective carrier 166, 168. Each carrier 166, 168 is pivotally connected to the respective mounting part 170, 172.

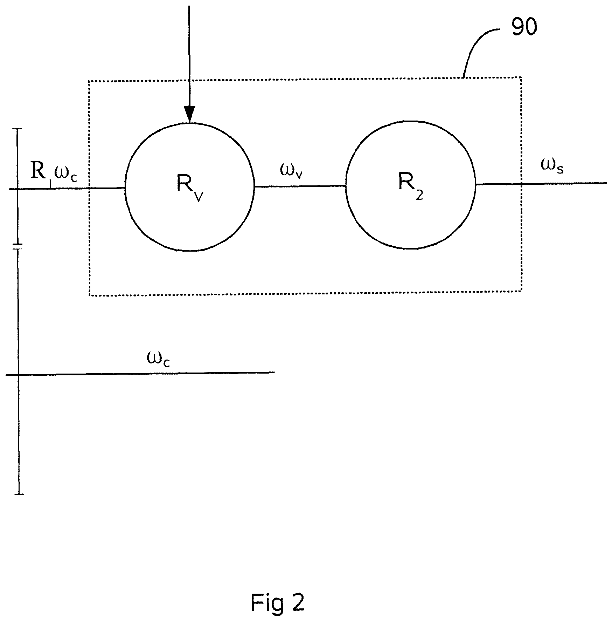

Each mounting part 170, 172 is carried on an elongate control member 174, such that it is prevented from lineal movement along the control member 174. The control member 174 may move in a linear, reciprocal manner in direction C, causing the mounting parts 170, 172 also to move in direction C. (In this embodiment, the control member does not comprise a movable and a fixed part with the slot arrangement shown in Figures 1 to 4.) Each carriage assembly is located within the toroidal cavity by the connection between the mounting parts 170, 172 and the control member 174, and by reaction point at the centre of the roller 120, 122 by its contact with the reaction member 160. In this embodiment reaction torque is borne by the reaction member 160 and not by the control member 174.

The reaction member 160 comprises a body 180 having an aperture 182 through which a variator input shaft and/or output shaft may pass with clearance. Reaction shafts 184, 190 project coaxially and in opposite directions from the body 180 and are aligned normal to the variator axis within the centre plane of the variator. End portions of each reaction shaft 184, 190 are retained in apertures formed, respectively, in a casing 100 of the variator and a mounting block 194 secured to the casing 100 such that shafts 184, 190 can rotate within the apertures. As a couple is applied to the reaction member 160 it is caused to rotate, which would urge the shafts 184, 190 to rotate. However, by restraining the end portion of the shafts 184, 190 within the apertures, the reaction torque is resisted. The reaction member 160 is operatively linked to the centre of each roller 120, 122 by a spherical joint 186, 188 so as to transmit the reaction torque from the rollers 120, 122 to the reaction member 160 and to allow for relative pivotal movement between the rollers 120, 122 and the reaction member 160. The reaction member 160 is mounted for rotation about the variator axis in response to reaction torque arising from the disc/roller contact during rotation of the discs thereby changing the variator ratio.

The control member 174 passes through the reaction member 160 at an aperture 192 but is not linked to it. There is suitably sufficient clearance between the control member 174 and the aperture 192 to avoid fouling as reaction torque is borne and the reaction member rotates about the variator axis.

The reaction member 160 is movable radially of the variator axis and may be moved in a non-radial direction such that that the reaction member 160 balances reaction loads generated by each roller 120, 122 within the toroidal cavity.

The reaction member 160 may include a damper to dampen movement of the body 180 for example in a radial direction relative to the variator axis. A mechanical end stop may be provided to limit movement of the reaction member 160 in a radial direction relative to the variator axis.

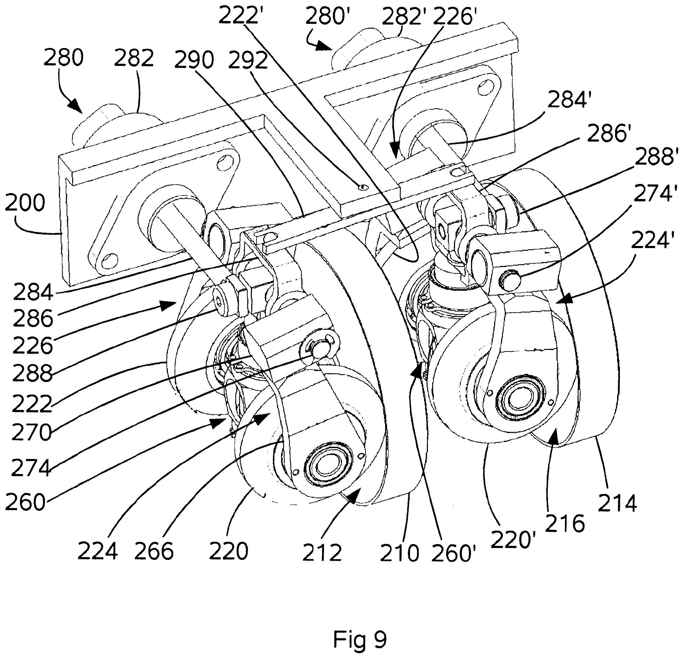

Figure 9 shows a part of a twin-cavity variator embodying the invention. The variator comprises an input race 210 and similar first and second output races 214 (only one is shown) disposed, in the direction of the variator axis, to opposite sides of the input race 210. Each output race 214 has a working surface 216 that faces the input race 210. The input race 210 has first and second working surfaces 212 that face, respectively, the first and second output races 214. Therefore, two toroidal cavities are defined, a first between the input race 210 and the first output race 214, and a second between the input race 210 and the second output race.

A first set of rollers 220, 222 is provided within the first toroidal cavity to transmit drive between the input race 210 and the first output race, and a second set of rollers 220', 222' is provided within the second toroidal cavity to transmit drive between the input race 210 and the second output race 214. Each roller 220, 222; 220', 222' is mounted on a respective carriage assembly 224, 226; 224' 226'. Each carriage assembly comprises a carrier 266 and a mounting part 270. The roller 220 is mounted for rotation on the carrier 266. The carrier is connected to the mounting part 270 such that it is free to undergo a tilting motion to change the tilt angle of the rollers 220, 222; 220', 222' and thereby change the variator ratio. The respective carriage assemblies 224, 226; 224' 226' are mounted for pivotal movement about an axis that passes through the centre of the respective roller.

A respective actuator 280, 280' is associated with each cavity. Each actuator 280, 280' comprises a body 282, 282' that is fixed to a casing 200 of the variator, and an actuator rod 284, 284' that can be driven linearly into or out of the body by suitable application of an electrical signal or hydraulic fluid, as the case may be, to the actuator 280, 280'.

Within each cavity, the mounting parts 270 of the two carriage assemblies are 224, 226; 224' 226' are connected to a common control rod 274, 274', such that they are fixed to the control rod against linear movement, but can pivot with respect to it. Each control rod 274, 274' is connected to a respective actuator rod 284, 284' through joint 288, 288' that admits pivotal movement between the control rod and the actuator rod. Thus, operation of the actuators 284, 284' causes linear movement of the control rods 274, 274', and therefore linear movement of the carriage assemblies 224, 226; 224' 226'.

Each cavity has a reaction member 260, 260' to which the rollers 220, 222; 220', 222' are operatively coupled by spherical joints such that the reaction members bear reaction loads arising from the respective rollers, substantially similar to the arrangement of the preceding embodiment. As in the preceding embodiment, each reaction member 260, 260' has reaction shafts, an end portion of one of which is retained within an aperture of the casing 200 of the variator. The other reaction shaft is secured by a yoke 286, 286' that has apertures through which the control rods 274, 274' pass.

The reaction members 260, 260' are operatively linked by a load-sharing assembly. The load-sharing assembly comprises a bar 290 mounted to the casing 286 by a pivot 292. The bar 290 is pivotally connected to the yokes 286, 286' symmetrically about the pivot 292. Therefore, an equal and opposite force is applied to each reaction member through its yoke, which ensures that an equal reaction torque is applied to the rollers 220, 222; 220', 222' in the two toroidal cavities.

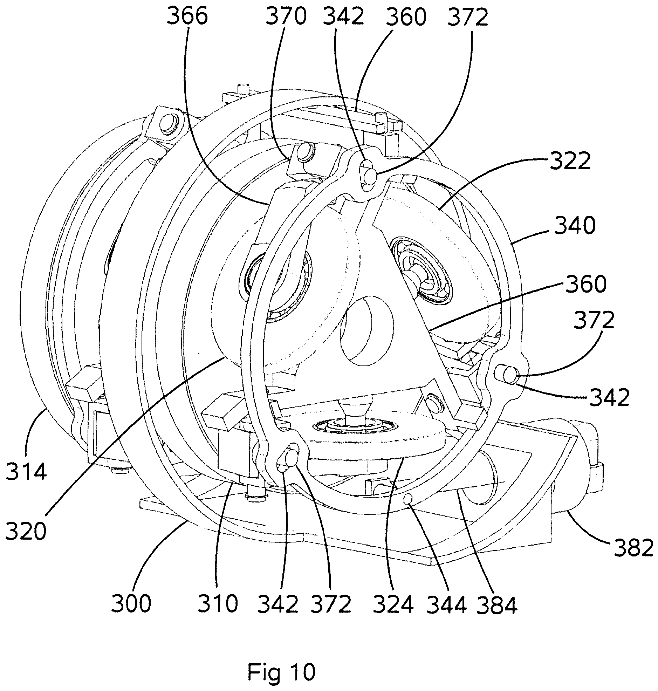

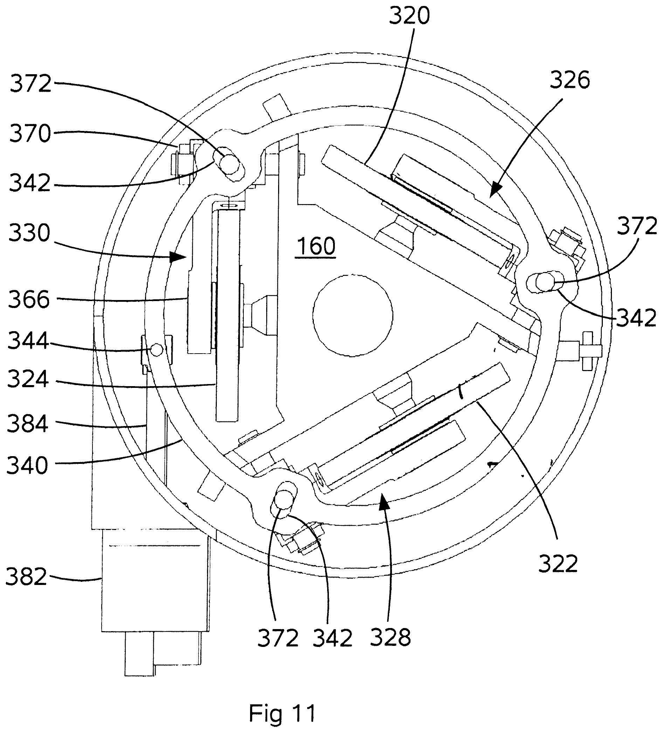

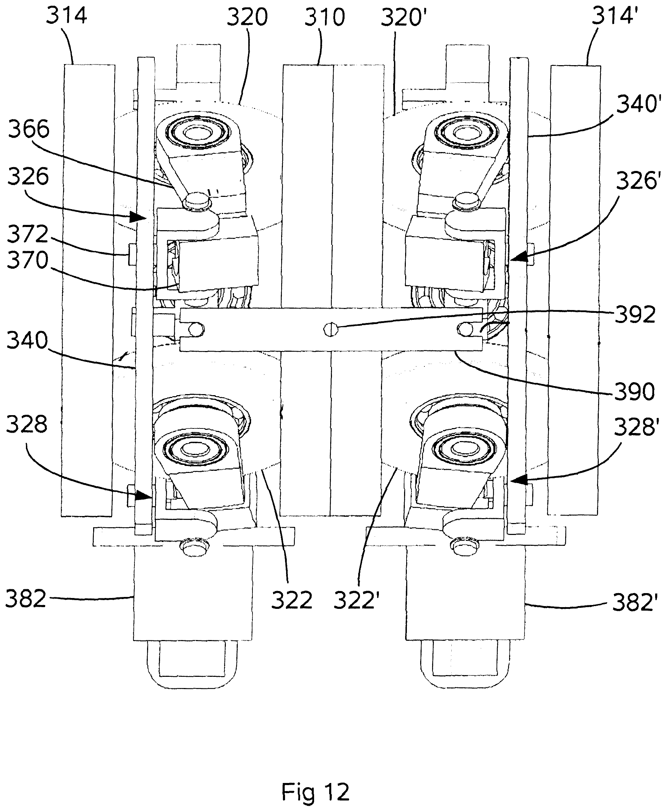

Figures 10 to 12 illustrate another embodiment of the invention. The variator comprises an input race 310 and similar first and second output races 314 (only one is shown) disposed, in the direction of the variator axis, to opposite sides of the input race 310. Within each of the two toroidal cavities defined by the races, there are three rollers 320, 322, 324; 320', 322' (one of which is not shown in the drawings).

The variator comprises a reaction member 360, 360' in each cavity. The reaction members 360, 360' are coupled to one another by a load balancing assembly that includes a bar 390 pivotally mounted on a casing 300 of the variator, each reaction member 360 being pivotally connected to the bar 390 symmetrically about its pivot 392.

Each roller 320, 322, 324; 320', 322 is carried for rotation by a respective carriage assembly 326, 328, 330; 326' 328' (one of which is not shown in the drawings). Each roller carriage assembly 320, 322, 324; 320', 322 comprises a carrier 366 and a mounting part 370. The roller 320 is mounted for rotation on the carrier 366. The carrier 366 is connected to the mounting part 370 such that it is free to undergo a tilting motion to change the tilt angle of the rollers 320, 322, 324; 320', 322 and thereby change the variator ratio. A control peg 372 projects from each mounting part.

An annular control member 340, 340' is provided in each cavity. Each control member 340, 340' has three radial slots 342 into each of which, one of the control pegs 372 is received. The variator further includes an actuator associated with each cavity. Each actuator comprises a body 382, 382' that is fixed to a casing 300 of the variator, and an actuator rod 384 (only one of which can be seen in the drawings) that can be driven linearly into or out of the cylinder by suitable application of an electrical signal or hydraulic fluid, as the case may be, to the actuator. Each actuator rod 384 is connected to a respective control member 340, 340' by a pivot 344, 344'. By this arrangement, operation of the actuator causes the control members 340, 340' to rotate, which, in turn, causes movement of the control pegs 370, and thus rotation of the carriers 366 on their respective mounting parts 370.

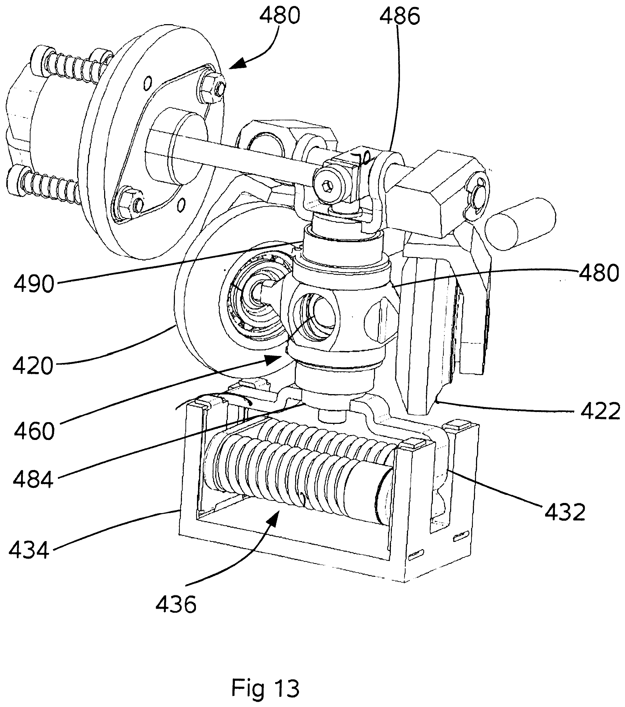

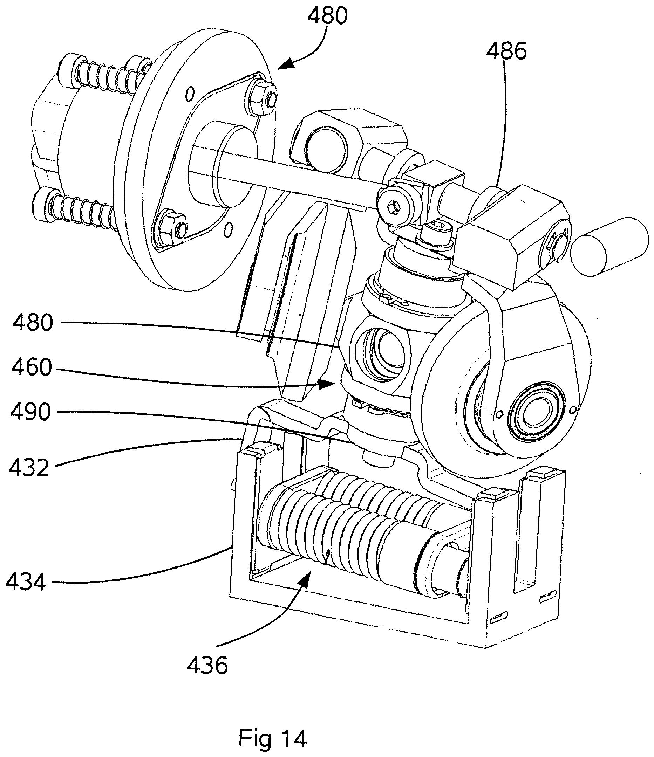

In Figures 13 and 14 the reaction member 460 is mounted for rotation about the variator axis in response to a reaction torque above a pre-determined level. The reaction member 460 comprises a body 480 having an aperture 482 through which a variator input shaft and/or output shaft may pass with clearance. Reaction shafts 484, 490 project coaxially and in opposite directions from the body 480 and are aligned normal to the variator axis within the centre plane of the variator. As in the second embodiment, one of the reaction shafts 490 is connected to an actuator 480 through a yoke 486. The other reaction shaft 490 is linked to a resilient mounting assembly 430.

In this embodiment, the resilient mounting assembly 430 includes a support bar 432 to which the reaction shaft 490 is connected and a cradle 434 that is connected to a casing of the variator. The support bar 432 is retained in the cradle by compressed springs 436 against which the reaction shaft 490 applies a torque reaction force. The reaction torque creates a couple on the support bar 432 and its rotation displaces transmission the reaction shaft 490. The springs 436 may be set to deflect when the force applied exceeds a certain threshold. The force imparted may be detected and employed to provide an input signal to the control member 470, for example such that the control member acts to reduce the reaction torque detected, thereby operating to reduce the torque passing through the variator.

In embodiments of the invention that incorporate a variator as described in the last-preceding paragraph, the variator is configured such that the reduction in ratio effected by the reaction member when the torque exceeds a threshold serves to complement the operation of the control system. Thus, if a transient change in operating conditions causes a sudden acceleration or deceleration of the engine, a variator with this configuration can protect components of the supercharging arrangement and associated components against damage from excessive torque.

It will be seen that in each of these embodiments, actuation of the variator to cause the rolling elements to pitch takes place substantially or entirely radially outwardly of the rolling elements. Thus, components that are responsible for performing actuation have minimal or no intrusion into the space between the rolling elements. In each of these embodiments, actuation of the variator to causes the rolling elements to pitch takes place in a space that does not extend beyond the races in a direction parallel to the variator axis. In many cases, when the variator is used as part of a larger transmission system, there is little or no available space beyond the races in the direction of the variator axis within which components can be packaged. In addition, in each embodiment, the axis about which the pitching rotation occurs is not coincident with a physical component such as a shaft and an axis - instead, it is defined by the constraints imposed upon the motion of the carriers by components (such as the actuation point and the reaction point) that are remote from the tilt axis.

The supercharging arrangement further includes a control system that operates to generate a signal to be applied to the actuator of the variator to cause it to operate at a specific ratio Rv, the aim being to optimise operation of the internal combustion engine 70.

The control system responds to the position of an operating control such as an accelerator pedal of a vehicle (or to some other control arrangement such as a cruise control) which gives the required engine operating request to effect the intentions of an operator of the vehicle. This generates a supercharger control variable request which could be a supercharger compressor speed, a supercharger air pressure, a mass air flow or an engine torque output directly. The chosen control variable request will then serve as the main control input in a closed loop control strategy. In this embodiment, this is achieved by calculating the air pressure that should appear at the outlet of the supercharger 80. This generates a supercharger air pressure request 400. The control system then calculates the mass airflow required to achieve the supercharger air pressure request at the current engine speed $\omega_c$. A supercharger compressor map 412 is then used to determine the speed of the supercharger that would achieve the mass airflow request, and form that generates a supercharger speed request. From that, a variator ratio request can be calculated at 414.

Typically, it is undesirable to apply a step change in supercharger speed request. Instead, the supercharger speed request is modified at 416 such that it falls within saturation limits that are dependent upon a range of instantaneous operational parameters 420. These parameters may include (potentially amongst others):

- the variator ratio (derived from measured variator input and output speeds), to ensure that the request does not cause the variator to attempt to adopt a ratio outside of its operating range;

- the output speed of the variator, to ensure that the request does not cause the variator to attempt to exceed its maximum output speed;

- the supercharger speed, to ensure that the request does not cause the supercharger to attempt to exceed its maximum operational speed;

- the power and torque to be transmitted by the variator (which can be derived from the mass airflow request and the supercharger air pressure request) to ensure that these do not exceed maximum operational values.

The saturated supercharger speed request is used as the main input to a closed-loop control stage 422, which has an output that is a linear position request supplied to drive the actuator 424 that directly controls the variator. This stage can either be open-loop if an actuator with a known linear position is used such as a stepper motor, or closed-loop if a non-positional actuator is used; the present embodiment adopts the latter arrangement. The closed-loop control stage 422 also has an error input that is the difference between the linear position request appearing at its output and the measured linear position 426. Further inputs to the closed-loop control stage 422 include the measured mass airflow 430 and the measured supercharger pressure ratio 432, which are combined at 434 to derive a signal indicative of the variator torque.

The rate of change of the variator ratio is then limited either by calculating the maximum rate of change of linear position or by using the mechanical torque limiting device as described earlier, if fitted. In either case the function and ruling equation is the same. The rate of change of ratio is required so that the inertial torques generated by accelerating the supercharger do not exceed the variator design envelope.

Within the closed-loop control stage 422, a feed-forward control stage 436 processes the saturated CVT ratio request to derive an actuator position value, for example, using a look-up table and, in cases where the variator includes a torque-limiting arrangement, the variator torque. The derived actuator position value is combined at 438 with the error input to calculate the actuator position value. The actuator position value is passed through a value-change limiting stage 440 before being passed to the output as the linear position request supplied to drive the actuator 424.

Thus, the feed-forward control stage 442 uses a chosen control variable to calculate a required supercharger operating point for given current engine conditions. Then, the supercharger operating point request and current engine operating conditions are used to determine a supercharger compressor speed that would achieve that request (this is the feed forward request). In addition, the closed loop system then modifies this feed-forward supercharger speed request to try and take out any error in the main control variable and current conditions.

The function of the value-change limiting stage 440 is to limit the rate of change in the output speed $\omega_v$ of the variator - that is, it ensures that $\dot{\omega}_v < \dot{\omega}_{v\max\square}$. The value of $\dot{\omega}_{v\max\square}$ is calculated at 442 and passed to an input of the value-change limiting stage 440, where

$$\dot{\omega}_{vmax} = \frac{Maximum\ variator\ torque - Instantaneous\ measured\ variator\ torque}{Inertia\ at\ the\ output\ of\ the\ variator}.$$

**Claims**

1. A supercharging arrangement for an internal combustion engine (70) comprising:

a supercharger (80) having a first rotational drive input shaft (84);
a transmission (90) having a second rotational drive input shaft to receive drive from the internal combustion engine (70) via a pulley at a speed ratio (R1), and a rotational drive output shaft connected to the first rotational drive input shaft of the supercharger (80),
wherein the transmission (90) includes a variator operatively connected between the second rotational drive input shaft and the rotational drive output shaft of the transmission (90), which variator has an output shaft that is driven at an operating ratio (Rv) from a third input shaft coming from a fixed ratio stage (R2) of the transmission; and
a control system that operates to cause the engine to deliver an amount of torque in response to a state of an operating control,
wherein the control system is operative to set the operating ratio (Rv) of the variator to a variator ratio request and to adjust the operating ratio (Rv) of the variator to ensure that a rate at which the supercharger speed changes does not exceed a predetermined limit, and to ensure that the torque that is applied to the output of the engine or to the variator does not exceed a threshold, and wherein the control system is operative to calculate an air pressure at an outlet of the supercharger to generate a supercharger air pressure request based on the state of the operating control, calculate a mass air flow required to achieve the supercharger air pressure request at a current speed of the internal combustion engine, determine a speed of the supercharger to achieve the calculated mass air flow, generate a supercharger speed request based on the determined speed of the supercharger, and calculate the variator ratio request based on the supercharger speed request.

2. A supercharging arrangement according to claim 1 in which the variator

3. A supercharging arrangement according to any preceding claim in which the threshold is one or more of: a function of a total engine torque; a proportion of the total engine torque; and, a fixed maximum value.

4. A supercharging arrangement according to any preceding claim in which the control system is operative to accelerate the supercharger (80) at a rate that is a function of an error value or proportional to an error value that is the difference between a target speed and a current speed of the supercharger (80).

5. A supercharging arrangement according to any preceding claim in which the variator is a full-toroidal variator.

6. A supercharging arrangement according to any preceding claim in which the variator comprises:

an input surface and an output surface, the input and output surfaces being coaxially mounted for rotation about a variator axis (V), and a toroidal cavity being defined between the input and output surfaces;
a plurality of rolling elements (20, 22) disposed between and being in driving engagement with the input and the output surfaces at respective contact regions, each rolling element being mounted on a carriage assembly (24, 26) for rotation about a rolling axis, each rolling element being free to pivot about a tilt axis, the tilt axis passing through the rolling element (20, 22) perpendicular to the rolling axis, and intersecting the rolling axis at a roller centre, whereby a change in the tilt angle causes a change in the variator ratio being the ratio of rotational speeds of the input and output surfaces.

7. A supercharging arrangement according to claim 6 in which at least one carriage assembly (24, 26) can cause pivotal movement, which pivotal movement is about a pitch axis that results in a change of a pitch angle of the rolling element (20, 22) associated with the at least one carriage assembly (24, 26), the pitch axis passing through the rolling centre and through the contact regions; and
wherein the variator further comprises a control member (40) operative to cause the at least one carriage assembly (24, 26) to undertake the pivotal movement thereby changing the pitch angle, so urging the plurality of rolling elements to pivot about their tilt axes and thereby provide a change in variator ratio.

8. A supercharging arrangement according to any preceding claim further comprising a step-up gearset coupled in series with the variator, in which the step-up gearset is optionally connected between the variator and the supercharger(80), and in which the step-up gearset is optionally a traction drive epicyclic gearset, and in which the step- up gearset optionally shares traction fluid with the variator.

9. A supercharging arrangement according to any preceding claim in which the supercharger (80) incorporates a centrifugal compressor and/or a positive-displacement compressor.

10. A supercharging arrangement according to any preceding claim, wherein the supercharging arrangement is incorporated into an induction system of a drivetrain for a vehicle, and wherein the control system optionally operates to cause the variator to operate at a ratio that causes a control variable of the drivetrain to approach a target value.

**Patentansprüche**

1. Aufladeanordnung für einen Verbrennungsmotor (70), umfassend:

einen Lader (80), der eine erste rotierende Antriebseingangswelle (84) aufweist;
ein Getriebe (90), das eine zweite rotierende Antriebseingangswelle aufweist, um den Antrieb vom Verbrennungsmotor (70) über eine Riemenscheibe mit einem Drehzahlverhältnis (R1) aufzunehmen;
und eine rotierende Drehantriebsausgangswelle, die mit der ersten rotierenden Antriebseingangswelle des Laders (80) verbunden ist,
wobei das Getriebe (90) einen Variator umfasst, der betriebsmäßig zwischen der zweiten rotierenden Antriebseingangswelle und der rotierenden Antriebsausgangswelle des Getriebes (90) angeschlossen ist;
wobei der Variator eine Ausgangswelle aufweist, die mit einem Betriebsverhältnis (Rv) von einer dritten Eingangswelle aus angetrieben wird, die von einer Stufe mit festem Verhältnis (R2) des Getriebes kommt; und
ein Steuersystem, das funktioniert, um zu bewirken, dass der Motor als Reaktion auf einen Zustand einer Betriebssteuerung ein Drehmoment abgibt,
wobei das Steuersystem betriebsfähig ist, um das Betriebsverhältnis (Rv) des Variators auf eine Variatorverhältnisanforderung einzustellen und das Betriebsverhältnis (Rv) des Variators anzupassen, um sicherzustellen, dass eine Geschwindigkeit, mit der sich die Laderdrehzahl ändert, eine vorbestimmte Grenze nicht überschreitet, und sicherzustellen, dass das Drehmoment, das auf die Leistung des Motors oder auf den Variator ausgeübt wird, einen Schwellenwert nicht überschreitet, und wobei das Steuersystem betriebsfähig ist, um einen Luftdruck an einem Auslass des Laders zu berechnen, um eine Laderluftdruckanforderung basierend auf dem Zustand der Betriebssteuerung zu generieren,
einen Luftmassenstrom zu berechnen, der erforderlich ist, um die Laderluftdruckanforderung bei einer aktuellen Drehzahl des Verbrennungsmotors zu erreichen, eine Drehzahl des Laders zu ermitteln, um den berechneten Luftmassenstrom zu erreichen, eine Laderdrehzahlanforderung basierend auf der ermittelten Drehzahl des Laders zu generieren und die Variatorverhältnisanforderung basierend auf der Laderdrehzahlanforderung zu berechnen.

2. Aufladeanordnung nach Anspruch 1, wobei der Variator ringförmig ist.

3. Aufladeanordnung nach einem der vorhergehenden Ansprüche, wobei der Schwellenwert einer oder mehrere der folgenden ist: eine Funktion eines gesamten Motordrehmoments; ein Anteil des gesamten Motordrehmoments; und ein fester Maximalwert.

4. Aufladeanordnung nach einem der vorhergehenden Ansprüche, wobei das Steuersystem betriebsfähig ist, um den Lader (80) mit einer Geschwindigkeit zu beschleunigen, die eine Funktion eines Fehlerwerts oder proportional zu einem Fehlerwert ist, der die Differenz zwischen einer Zieldrehzahl und einer aktuellen Drehzahl des Laders (80) ist.

5. Aufladeanordnung nach einem der vorhergehenden Ansprüche, bei dem der Variator ein vollringförmiger Variator ist.

6. Aufladeanordnung nach einem der vorhergehenden Ansprüche, wobei der Variator umfasst:

eine Eingangsfläche und eine Ausgangsfläche, wobei die Eingangs- und die Ausgangsfläche zur Drehung um eine Variatorachse (V) koaxial montiert sind und ein ringförmiger Hohlraum zwischen der Eingangs- und der Ausgangsfläche definiert ist;
eine Vielzahl von Rollelementen (20, 22), die zwischen der Eingangs- und der Ausgangsfläche an jeweiligen Kontaktbereichen angeordnet sind und mit diesen in Antriebseingriff stehen, wobei jedes Rollelement auf einer Schlittenanordnung (24, 26) zur Rotation um eine Rollachse montiert ist; wobei jedes Rollelement frei um eine Neigungsachse schwenken kann, wobei die Neigungsachse durch das Rollelement (20, 22) senkrecht zur Rollachse verläuft und die Rollachse in einer Rollenmitte schneidet, wodurch eine Änderung des Neigungswinkels eine Änderung des Variatorverhältnisses bewirkt, das das Verhältnis der Drehzahlen der Eingangs- und Ausgangsflächen ist.

7. Aufladeanordnung nach Anspruch 6, wobei mindestens eine Schlittenanordnung (24, 26) eine Schwenkbewegung bewirken kann, wobei die Schwenkbewegung um eine Neigungsachse erfolgt, die zu einer Änderung eines Neigungswinkels des Rollelements (20, 22) führt, das der mindestens einen Schlittenanordnung (24, 26) zugeordnet ist, wobei die Neigungsachse durch das Rollzentrum und durch die Kontaktbereiche verläuft; und
wobei der Variator ferner ein Steuerelement (40) umfasst, das betriebsfähig ist, um zu bewirken, dass die mindestens eine Schlittenanordnung (24, 26) die Schwenkbewegung ausführt, wodurch der Neigungswinkel geändert wird, wobei somit die Vielzahl von Rollelementen so getrieben wird, dass sie um ihre Neigungsachsen schwenken und dadurch eine Änderung des Variatorverhältnisses bereitstellen.

8. Aufladeanordnung nach einem der vorhergehenden Ansprüche, ferner umfassend einen Übersetzungsgetriebesatz, der mit dem Variator Reihe gekoppelt ist, wobei der Übersetzungsgetriebesatz optional zwischen dem Variator und dem Lader (80) angeschlossen ist und wobei der Übersetzungsgetriebesatz optional ein Plantetengetriebesatz mit Traktionsantrieb ist und wobei der Übersetzungsgetriebesatz optional das Traktionsfluid mit dem Variator gemeinsam benutzt.

9. Aufladeanordnung nach einem der vorhergehenden Ansprüche, wobei der Lader (80) einen Turbokompressor und/oder einen Verdrängerkompressor enthält.

10. Aufladeanordnung nach einem der vorhergehenden Ansprüche, wobei die Aufladeanordnung in ein Induktionssystem eines Antriebsstrangs für ein Fahrzeug eingebaut ist und wobei das Steuersystem optional funktioniert, um zu bewirken, dass der Variator in einem Verhältnis arbeitet, das bewirkt, dass sich eine Steuervariable des Antriebsstrangs einem Zielwert nähert.

## Revendications

1. Agencement de suralimentation pour un moteur à combustion interne (70) comprenant :

   un compresseur à suralimentation (80) possédant un premier arbre d'entrée d'entraînement en rotation (84) ; une transmission (90) possédant un deuxième arbre d'entrée d'entraînement en rotation pour recevoir l'entraînement du moteur à combustion interne (70) via une poulie à un rapport de transmission (R1), et un arbre de sortie d'entraînement en rotation relié au premier arbre d'entrée d'entraînement en rotation du compresseur à suralimentation (80),
   ladite transmission (90) comprenant un variateur connecté fonctionnellement entre le deuxième arbre d'entrée d'entraînement en rotation et l'arbre de sortie d'entraînement en rotation de la transmission (90), lequel variateur possède un arbre de sortie qui est entraîné à un rapport de fonctionnement (Rv) à partir d'un troisième arbre d'entrée provenant d'un étage à rapport fixe (R2) de la transmission ; et
   un système de commande qui fonctionne pour amener le moteur à délivrer une quantité de couple en réponse à un état d'une commande de fonctionnement,
   ledit système de commande fonctionnant pour fixer le rapport de fonctionnement (Rv) du variateur sur une demande de rapport de variateur et pour régler le rapport de fonctionnement (Rv) du variateur pour garantir qu'un taux auquel la vitesse du compresseur à suralimentation change ne dépasse pas une valeur limite prédéfinie, et pour garantir que le couple qui est appliqué à la sortie du moteur ou sur le variateur ne dépasse pas un seuil,
   et ledit système de commande fonctionnant pour
   calculer une pression d'air au niveau d'une sortie du compresseur à suralimentation pour générer une demande de pression d'air de compresseur à suralimentation en fonction de l'état de la commande de fonctionnement, calculer un débit d'air massique requis pour atteindre la demande de pression d'air de compresseur à suralimentation à une vitesse courante du moteur à combustion interne, déterminer une vitesse du compresseur à suralimentation pour atteindre le débit d'air massique calculé, générer une demande de vitesse de compresseur à suralimentation en fonction de la vitesse déterminée du compresseur à suralimentation, et calculer la demande de rapport de variateur en fonction de la demande de vitesse de compresseur à suralimentation.

2. Agencement de suralimentation selon la revendication 1, dans lequel le variateur est toroïdal.

**3.** Agencement de suralimentation selon l'une quelconque des revendications précédentes, dans lequel le seuil est un ou plusieurs parmi : une fonction d'un couple moteur total ; une proportion du couple moteur total ; et une valeur maximale fixe.

**4.** Agencement de suralimentation selon l'une quelconque des revendications précédentes, dans lequel le système de commande fonctionne pour accélérer le compresseur à suralimentation (80) à un taux qui est fonction d'une valeur d'erreur ou proportionnel à une valeur d'erreur qui est la différence entre une vitesse cible et une vitesse courante du compresseur à suralimentation (80).

**5.** Agencement de suralimentation selon l'une quelconque des revendications précédentes, dans lequel le variateur est un variateur entièrement toroïdal.

**6.** Agencement de suralimentation selon l'une quelconque des revendications précédentes, dans lequel le variateur comprend :

une surface d'entrée et une surface de sortie, les surfaces d'entrée et de sortie étant montées coaxialement pour tourner autour d'un axe de variateur (V), et une cavité toroïdale étant définie entre les surfaces d'entrée et de sortie ;
une pluralité d'éléments roulants (20, 22) disposés entre et étant en engagement d'entraînement avec les surfaces d'entrée et de sortie au niveau des régions de contact respectives, chaque élément roulant étant monté sur un ensemble de chariot (24, 26) pour tourner autour d'un axe de roulement, chaque élément roulant étant libre de pivoter autour d'un axe d'inclinaison, l'axe d'inclinaison passant à travers l'élément roulant (20, 22) perpendiculairement à l'axe de roulement, et coupant l'axe de roulement au centre d'un rouleau, moyennant quoi un changement de l'angle d'inclinaison provoque un changement du rapport de variateur qui est le rapport des vitesses de rotation des surfaces d'entrée et de sortie.

**7.** Agencement de suralimentation selon la revendication 6, dans lequel au moins un ensemble de chariot (24, 26) peut provoquer un mouvement de pivotement, lequel mouvement de pivotement est autour d'un axe de tangage qui entraîne un changement d'un angle de tangage de l'élément roulant (20, 22) associé audit au moins un ensemble de chariot (24, 26), l'axe de tangage passant par le centre de roulement et par les régions de contact ; et ledit variateur comprenant en outre un élément de commande (40) fonctionnant pour amener ledit au moins un ensemble de chariot (24, 26) à entreprendre le mouvement de pivotement d'où une modification de l'angle de tangage, amenant ainsi la pluralité d'éléments roulants à pivoter autour de leurs axes d'inclinaison et fournir ainsi un changement de rapport de variateur.

**8.** Agencement de suralimentation selon l'une quelconque des revendications précédentes, comprenant en outre un train d'engrenages multiplicateur couplé en série au variateur, dans lequel le train d'engrenages multiplicateur est éventuellement connecté entre le variateur et le compresseur à suralimentation (80), et dans lequel le train d'engrenages multiplicateur est éventuellement un train d'engrenages épicycloïdal d'entraînement par traction, et dans lequel le train d'engrenages multiplicateur partage éventuellement un fluide de traction avec le variateur.

**9.** Agencement de suralimentation selon l'une quelconque des revendications précédentes, dans lequel le compresseur à suralimentation (80) incorpore un compresseur centrifuge et/ou un compresseur volumétrique.

**10.** Agencement de suralimentation selon l'une quelconque des revendications précédentes, ledit agencement de suralimentation étant incorporé dans un système d'induction d'une chaîne cinématique pour un véhicule, et ledit système de commande fonctionnant éventuellement pour amener le variateur à fonctionner à un rapport qui amène une variable de commande de la chaîne cinématique à approcher une valeur cible.

Fig 1

Fig 2

Fig 3

Fig 4

Fig 5

Fig 6

Fig 7

Fig 8

Fig 9

Fig 10

Fig 11

Fig 12

Fig 13

480

486

480

460

490

432

434

436

Fig 14

Fig 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011064572 A2
- WO 2008002457 A2
- US 2012000446 A1
- US 20100267510 A1
- GB 2394519 A
- US 6551210 A